# EUROPEAN PATENT SPECIFICATION

(11) **EP 2 799 270 B1**
(45) Date of publication and mention of the grant of the patent: **15.02.2017**
(21) Application number: 12861544.0
(22) Date of filing: 03.12.2012
(51) Int. Cl.: B60K 11/04, B60K 11/08

(54) **SHUTTER DEVICE**
BLENDENVORRICHTUNG
DISPOSITIF OBTURATEUR

(30) Priority: 28.12.2011 JP 2011287119
(43) Date of publication of application: 05.11.2014
(73) Proprietor: Mikuni Corporation, Tokyo 101-0021 (JP)
(72) Inventor: HOSONO, Tsuyoshi, Odawara-shi Kanagawa 250-0055 (JP); KIMURA, Takahiko, Odawara-shi Kanagawa 250-0055 (JP)
(74) Representative: Isarpatent
(86) International application number: PCT/JP2012/081244
(87) International publication number: WO 2013/099527

(56) References cited:
- FR-A3- 2 933 042
- JP-A- 2010 223 150
- JP-A- 2011 143 913
- JP-U- S63 127
- JP-U- S58 112 625
- JP-U- S58 139 327
- JP-Y- S 312 111
- US-A- 4 753 288

## Description

### TECHNICAL FIELD

The present invention relates to a shutter device which is used for a grill shutter arranged at a front part of an automobile, and in particular, relates to a shutter device in which opening/closing of a shutter valve is performed by combination of an actuator and a wind-force assisting mechanism.

### BACKGROUND ART

FR 2 933 042 describes a shutter device according to the preamble of claim 1.

A grill shutter arranged at the front part of an automobile produces effects to prevent overheating as introducing air into an engine room, to accelerate warming-up at engine operation, to reduce air resistance during high speed operation, and so on, by opening and closing a shutter valve in accordance with the situation.

There have been various open/close mechanisms of a shutter valve. For example, in a front grill disclosed in Patent Literature 1, a shutter valve is closed using travelling wind from the front side. This produces an effect to reduce air resistance particularly during high speed operation.

Further, in a grill open/close device disclosed in Patent Literature 2, a plurality of grills are opened and closed by a single actuator. This produces an effect that air amount can be adjusted as desired.

### Cited Literature

### Patent Literature

Patent Literature 1: Japanese Utility Model Application Laid-Open No. 58-112625
Patent Literature 2: Japanese Utility Model Application Laid-Open No. 58-139327

### SUMMARY OF THE INVENTION

However, besides high speed operation, using travelling wind does not contribute to warming-up acceleration because the grill is in a fully-open state. Further, using an actuator brings a high possibility of occurrence of engine overheating when the actuator becomes inoperable in a fully-closed state due to a failure.

To address the above issues, an object of the present invention is to provide a shutter device having a fail-safe function to prevent occurrence of overheating even when an actuator becomes inoperable while contributing to warming-up acceleration and air resistance reduction.

To achieve the above object, the present invention provides a shutter device including a shutter valve which opens and closes an air port, a lever having one end connected to a rotating shaft of the shutter valve and the other end connected to an actuator, and biasing means which biases the shutter valve in an opening direction. Here, opening/closing of the shutter valve is controlled by the actuator rotating the lever when opening of the shutter valve is between the fully-open and predetermined opening, and the shutter valve is closed by wind pressure of travelling wind when the opening of the shutter valve is between the predetermined opening and the fully-closed.

Here, the biasing means may be a return spring which is arranged at a connection position between the lever and the rotating shaft. Further, connection between the rotating shaft and the lever may be performed owing to that a convex portion which is arranged at a side face of the shutter valve as being shorter than an elongate hole formed at the lever is fitted to the elongate hole, the biasing means may be formed of the elongate hole and the convex portion, and the shutter valve may be biased to the lower side of the elongate hole due to own weight.

Further, the shutter device may include a plurality of the shutter valves, and a linkage mechanism which interlocks rotating shafts of the adjacent shutter valves, and the lever and the biasing means may be arranged at least at a single shutter valve in common or a single shutter valve for each thereof so that the shutter valves are rotated as being interlocked. Here, the linkage mechanism may be configured that the levers connected to the rotating shafts are connected by a rod.

A shutter device according to the present invention produces an effect that a fully-closed state is not maintained even when an actuator becomes inoperable as well as effects of air resistance reduction during high speed operation and warming-up acceleration at engine operation.

### BRIEF DESCRIPTION OF THE DRAWINGS

FIG. 1 is a perspective view of a shutter device using a return spring as biasing means.
FIG. 2 is a front view and a side view of the shutter device.
FIGs. 3(a) to 3(c) are sectional views; FIG. 3(a) illustrates a fully-open state, FIG. 3(b) illustrates a predetermined opening state, and FIG. 3(c) illustrates a fully-closed state.
FIG. 4 is an explanatory view for attaching the return spring as the biasing means.
FIGs. 5(a) to 5(c) are explanatory views for operational directions of forces; FIG. 5(a) illustrates a fully-open state, FIG. 5(b) illustrates a predetermined opening state, and FIG. 5(c) illustrates a fully-closed state.
FIGs. 6(a) to 6(c) are perspective views of a shutter device utilizing an elongate hole; FIG. 6 (a) illustrates a fully-open state, FIG. 6(b) illustrates a predetermined opening state, and FIG. 6(c) illustrates a fully-closed state.
FIGs. 7(a) to 7(c) are front views and sectional views of the shutter device utilizing the elongate hole; FIG. 7(a) illustrates a fully-open state, FIG. 7(b) illustrates a predetermined opening state, and FIG. 7(c) illustrates a fully-closed state.
FIG. 8 is an enlarged view of a lever having the elongate hole.

### EMBODIMENT OF THE INVENTION

In the following, embodiments of the present invention will be described with reference to the attached drawings.

### [First Embodiment]

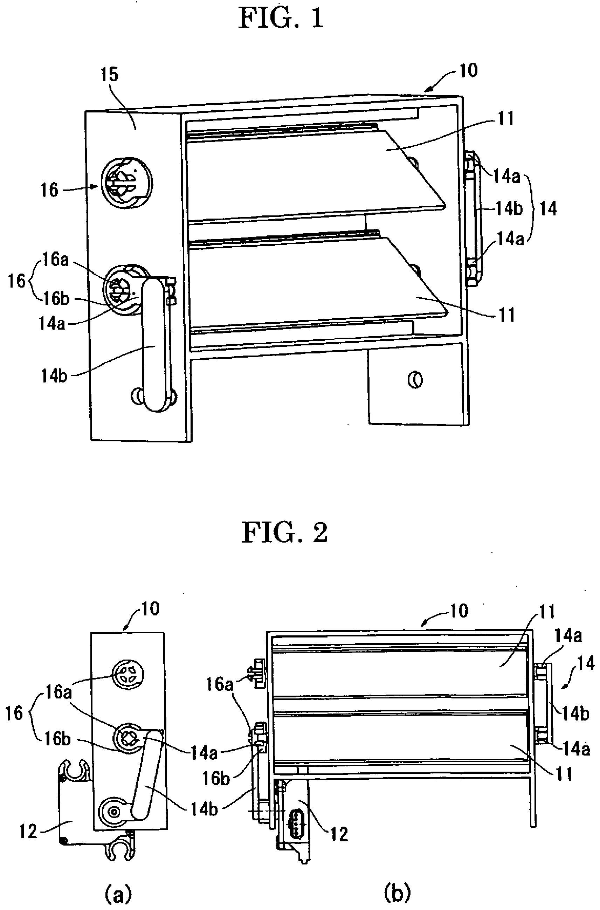

FIG. 1 is a perspective view of a shutter device using a return spring as biasing means. FIG. 2 is a front view and a side view of the shutter device.

The present embodiment relates to a shutter device 10 which is used for a grill shutter. The shutter device 10 has a structure that a rotating shaft 16 of a shutter valve 11 penetrates a frame 15 to cause the shutter valve 11 to be rotatably attached to the frame 15. The shutter device 10 is arranged at a front part of an automobile. Here, when attached to an automobile, the frame 15 serves as an outer rim of an air port. In the first embodiment, two shutter valves 11 are arranged. Here, the number of the shutter valves 11 is to be determined for every car model without being particularly limited. Further, in the present embodiment, the shutter valve 11 has a plate shape. However, not limited to a plate shape, it is freely designed, for example, to have a curved shape to be matched to a bumper shape. The rotating shaft 16 includes a connection portion 16a which is connected to a lever 14a and a stopper 16b which limits rotation of the lever 14a. Here, biasing means is arranged at a position where the lever 14a and the rotating shaft 16 are connected. Details thereof will be described later.

As illustrated in FIG. 2, one rod 14b is interlocked with an actuator 12. Here, depending on a structure thereof, the actuator 12 may be directly interlocked with the lever 14a without using the rod 14b. At the other side where the actuator 12 is not interlocked, levers 14a are connected respectively to rotating shafts 16 of two adjacent shutter valves 11 and the rod 14b connects the levers 14a. Thus, a linkage mechanism 14 is formed. According to the mechanism, movement of the actuator 12 is transmitted concurrently to the two shutter valves 11 as being interlocked therewith.

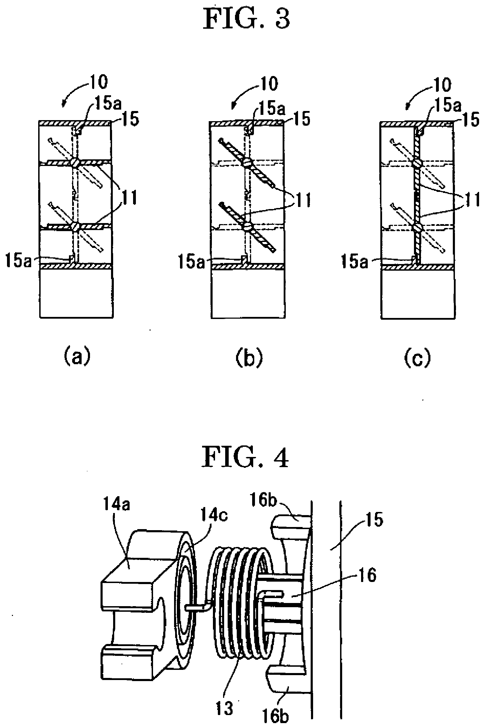

FIGs. 3(a) to 3(c) are sectional views; FIG. 3(a) illustrates a fully-open state, FIG. 3(b) illustrates a predetermined opening state, and FIG. 3(c) illustrates a fully-closed state. In the first embodiment, the right side in the drawings is set as the front of an automobile. However, the left side may be set as the front of an automobile.

The fully-open state as illustrated in FIG. 3(a) is provided when an engine and the like are required to be cooled while introducing a more amount of air. Here, the fully-open state denotes a state that opening of the shutter valve 11 is the maximum. In the first embodiment, the shutter valve 11 is in a state of being horizontal just as an example. There may be a case that the shutter valve 11 is not horizontal in the fully-open state.

The predetermined opening state as illustrated in FIG. 3(b) is provided for accelerating warming-up at engine operation or for preventing overcooling which occurs in the fully-open state. Here, the predetermined opening state denotes opening which is determined between the fully-open and the fully-closed. In the first embodiment, the shutter valve 11 is at an angle of 45 degrees. However, not limited to 45 degrees, the angle of the shutter valve 11 in the predetermined opening state is determined by design.

The fully-closed state as illustrated in FIG. 3(c) is provided for reducing air resistance by preventing travelling wind from being introduced to the inside during high speed travelling and the like. Here, the fully-closed state denotes a state in which air is prevented from being introduced to the inside of the shutter device 10 from the front side. In the first embodiment, the shutter valve 11 is in a state of being vertical. However, it is not limited to the state of being vertical. Here, air resistance reduction provides an advantage to improve fuel efficiency.

When the opening of the shutter valve 11 is between the fully-open state of FIG. 3(a) and the predetermined opening state of FIG. 3(b), the movement of the shutter valves 11 is controlled by the actuator 12 rotating the lever 14a. When the opening is between the predetermined opening state of FIG. 3(b) and the fully-closed state of FIG. 3(c), the shutter valve 11 is moved in the closing direction by wind pressure of travelling wind and in the opening direction by the biasing means. Basically, travelling wind inflows from the front of the automobile. However, depending on location of the shutter device 10, there may be a case of inflowing from a position other than the front. At the fully-closed position, a projection 15a arranged at the frame 15 and the shutter valve 11 are contacted, so that excess rotation of the shutter valve 11 can be prevented. When end parts of the shutter valves 11 are formed into hook shapes and the end parts of the shutter valves 11 located one above the other are mutually overlapped, air leakage in the fully-closed state can be reduced.

Overheating is more likely to occur after changing from high speed travelling to low speed travelling or a stopped state. In such a case, the opening is required to be fully-open or at least at the predetermined opening to prevent occurrence of overheating. Here, if movement between the predetermined opening state and the fully-closed state is controlled by the actuator 12, the fully-closed state is maintained when the actuator 12 cannot be moved due to a failure, for example, in the fully-closed state. In this case, there is a high possibility that overheating occurs. To prevent such a situation, the present invention includes the biasing means which causes movement of returning from the fully-closed state to the predetermined opening state. According to the above, since the actuator 12 operates only between the fully-open state and the predetermined opening state, the fully-closed state is not to be maintained even when the actuator 12 fails to operate properly. In this case, it is possible to avoid at least overheating.

Next, the biasing means will be described. FIG. 4 is an explanatory view for attaching a return spring which is an example of the biasing means. In the first embodiment, a return spring 13 is arranged between the rotating shaft 16 of the shutter valve 11 and the lever 14a as the biasing means. The lever 14a includes a space 14c which is capable of accommodating the return spring 13. The return spring 13 biases the lever 14a in a direction to open the shutter valve 11. Here, the return spring 14a being the biasing means is not necessarily arranged at the lever 14a which is connected to the actuator 12. When a plurality of the shutter valves 11 exist, the shutter valves 11 are interlocked. Therefore, it is not particularly required to limit where the return spring 14a is arranged. Naturally, it is possible to arrange at a plurality of positions.

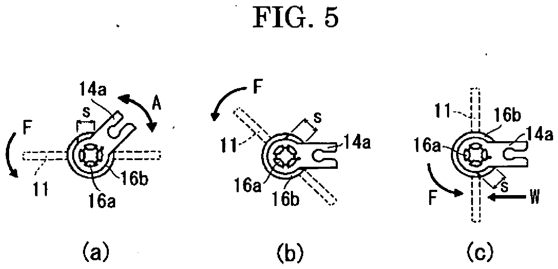

FIGs. 5(a) to 5(c) are explanatory views for operational directions of forces; FIG. 5(a) illustrates a fully-open state, FIG. 5(b) illustrates a predetermined opening state, and FIG. 5(c) illustrates a fully-closed state. A relative rotation range of the lever 14a against the rotating shaft 16 is limited by the stopper 16b arranged at the rotating shaft 16. The stopper 16b has a C-shape obtained by eliminating a part of a cylindrical rib and accommodates the lever 14a whose width is smaller than a width of an opening portion of the C-shape. Then, the return spring 13 being the biasing means biases the shutter valve 11 in the direction to be opened. The relative rotation can be performed only by the amount of a gap s formed between the stopper 16b and the lever 14a.

Between the fully-open state of FIG. 5 (a) and the predetermined opening state of FIG. 5(b), a rotational force A is exerted from the actuator to the lever 14a. In such a case, when the shutter valve 11 is to be closed, transmission of the force is performed by the lever 14a being contacted to the stopper 16b. On the contrary, when the shutter valve 11 is to be opened, since a biasing force F of the return spring 13 is exerted, transmission of the force from the lever 14a to the stopper 16b is performed via the return spring 13. Here, the rotation is performed without changing a relative positional relation as maintaining the gap s between the lever 14a and the rotating shaft 16.

Between the predetermined opening state of FIG. 5(b) and the fully-closed state of FIG. 5(c), movement of the shutter valve 11 is determined by a balance between travelling wind W and the biasing force F. That is, when the travelling wind W becomes larger than the biasing force F, the shutter valve 11 is rotated toward the fully-closed state. When the travelling wind W becomes smaller than the biasing force F, the shutter valve 11 is rotated toward the predetermined opening state. At that time, the lever 14a and the rotating shaft 16 are relatively rotated. Here, it is also possible that the lever 14a in the fully-closed state is contacted to the stopper 16b at the opposite side to the side in the predetermined opening state.

According to a grill shutter using the shutter device as described above, the predetermined opening can be ensured without being maintained at the fully-closed state even when the actuator fails. Accordingly, it is possible to avoid at least overheating, while producing effects such as air resistance reduction during high speed operation and warming-up acceleration at engine operation. Further, since movement of the actuator is limited between the fully-open state and the predetermined opening state, the actuator can be downsized and the device can be also downsized as a whole. In addition, since the movement of the actuator can be small, it is possible to produce an effect to suppress power consumption.

### [Second Embodiment]

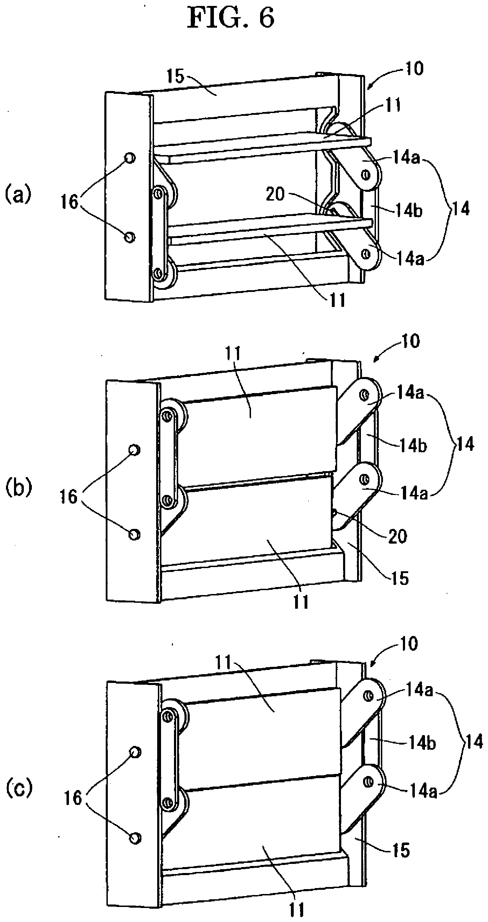

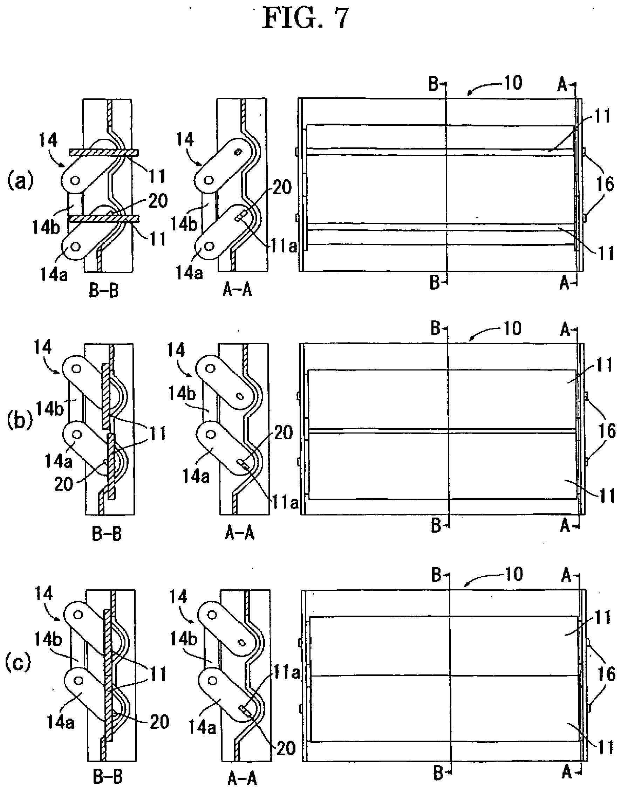

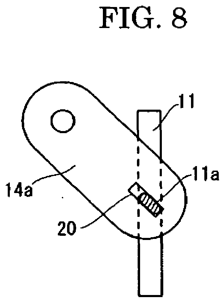

Next, description will be performed on an embodiment of a shutter device used for a grill shutter in which a shutter valve is biased not by a return spring but by utilizing an elongate hole. FIGs. 6(a) to 6(c) are perspective views of a shutter device utilizing an elongate hole; FIG. 6(a) illustrates a fully-open state, FIG. 6(b) illustrates a predetermined opening state, and FIG. 6(c) illustrates a fully-closed state. Further, FIGs. 7(a) to 7(c) are front views and sectional views of the shutter device utilizing the elongate hole; FIG. 7(a) illustrates a fully-open state, FIG. 7(b) illustrates a predetermined opening state, and FIG. 7(c) illustrates a fully-closed state. FIG. 8 is an enlarged view of a lever having the elongate hole. In FIG. 6, a shutter device 10 is viewed from the inner side thereof. Here, being the same as the first embodiment, limitation is not particularly applied on the number and shape of the shutter valves 11.

In the present embodiment, opening/closing of the shutter valves 11 is performed by lifting and lowering a linkage mechanism 14 by an actuator (not illustrated). Here, it is not particularly required to limit to which linkage mechanism 14 the actuator is connected. This is because that the shutter valves 11 are interlocked owing to that the linkage mechanism 14 has a structure that a rod 14b connects the levers 14a located one above the other. Here, when the shutter valve 11 is singularly arranged, there may be a case that the rod 14b is not arranged. In such a case, it is also possible that the actuator is configured to directly rotate the lever 14a.

In the present embodiment, the shutter valve 11 and the lever 14a are coupled and the rotating shaft 16 arranged at the lever 14a is arranged as penetrating the frame 15. Accordingly, the shutter valve 11 is rotated when the lever 14a is rotated. Here, coupling of the rotating shaft 16 is not necessarily performed as penetrating the frame 15. It is only required to be coupled in a rotatable manner. Certain coupling between the shutter valve 11 and the lever 14a is performed in a fixed manner and other coupling is performed in a slidable manner with the elongate hole 20 arranged at the lever 14a. As illustrated in FIG. 8, the slidable coupling is obtained while a convex portion 11a being shorter than the elongate hole 20 is formed at a side face of the shutter valve 11 and the convex portion 11a is fitted to the elongate hole 20. In the second embodiment, the shutter valve 11 at the upper side is fixedly coupled and the shutter valve 11 at the lower side is slidably coupled. Here, both the shutter valves 11 and the levers 14a are coupled so as to be synchronously rotated.

Similarly to the description of the first embodiment, the fully-open state as illustrated in FIGs. 6(a) and 7(a) is provided when an engine and the like are required to be cooled while introducing a more amount of air. The predetermined opening state as illustrated in FIGs. 6(b) and 7(b) is provided for accelerating warming-up at engine operation or for preventing overcooling which occurs in the fully-open state. The fully-closed state as illustrated in FIGs. 6(c) and 7(c) is provided for reducing air resistance without introducing travelling wind to the inside during high speed travelling. Here, similarly to the first embodiment, the fully-open state denotes a state that opening of the shutter valve 11 is the maximum and the fully-closed state denotes a state in which air is prevented from being introduced to the inside of the shutter device 10 from the front side.

However, the predetermined opening state is obtained slightly differently between the first embodiment and the second embodiment. In the first embodiment, the predetermined opening state denotes that the shutter valve 11 is at a predetermined angle between fully-open state and the fully-closed state. In the second embodiment, the angle of the shutter valve 11 in the predetermined opening state is the same as the angle (in the drawing, 90 degrees) in the fully-closed state. Here, the elongate hole 20 is formed in a direction being obliquely downward at 45 degrees as directing to the front side of the automobile. Accordingly, the convex portion 11a of the shutter valve 11 attached to the elongate hole 20 slides along the elongate hole 20 due to own weight of the shutter valve 11, so that the shutter valve 11 is located at the lower side from the fully-closed position by the amount of the elongate hole 20. In this case, an opening section is created between the shutter valve 11 at the upper side and the shutter valve 11 at the lower side. This state is considered as the predetermined opening state in the second embodiment. Here, the elongate hole 20 is simply required to be formed in a direction so that the shutter valve 11 is biased downward when the shutter valve 11 is at the angle of fully-closed state, without being limited to a specific angle. Further, the location of the opening section is determined depending on which shutter valve 11 is attached to the elongate hole 20.

Next, movement of the shutter valve 11 will be described. When the opening is between the fully-open state and the predetermined opening state, the movement is caused by an actuator for both opening and closing. When the opening is between the predetermined opening state and the fully-closed state, the movement is determined by a balance between travelling wind from the front side and a biasing force for sliding along the elongate hole 20. That is, when wind pressure of travelling wind overcomes the biasing force, the shutter valve 11 moves toward the fully-closed state. When the wind pressure is smaller than the biasing force, the shutter valve 11 moves toward the predetermined opening state due to own weight. Here, to make sliding of the shutter valve 11 more reliable, it is also possible to add weight above or below the shutter valve 11.

According to the above configuration, in the second embodiment as well, the fully-closed state is prevented from being maintained even when the actuator fails. Accordingly, it is possible to avoid at least overheating, while producing effects such as air resistance reduction during high speed operation and warming-up acceleration at engine operation.

In the present invention, not limited to the return spring described in the first embodiment and the elongate hole structure described in the second embodiment, the biasing means may be configured variously as long as being capable of biasing the shutter valve in the opening direction. For example, it is also possible to adopt a configuration that the shutter valve is pulled in the opening direction by an elastic member such as a spring.

In the description of the first and second embodiments, the shutter device is used for a grill shutter. However, not limited to a grill shutter, the shutter device according to the present invention can be arranged in front of a radiator under a hood or in front of an air compressor.

### EXPLANATION OF REFERENCES

- 10: Shutter device
- 11: Shutter valve
- 11a: Convex portion
- 12: Actuator
- 13: Return spring
- 14: Linkage mechanism
- 14a: Lever
- 14b: Rod
- 15: Frame
- 16: Rotating shaft
- 16a: Connection portion
- 16b: Stopper
- 20: Elongate hole

## Claims

1. A shutter device, comprising:
a shutter valve which opens and closes an air port;
a lever having one end connected to a rotating shaft of the shutter valve and the other end connected to an actuator; and
biasing means which biases the shutter valve in an opening direction, the device being **characterized in that**
the opening/closing of the shutter valve is controlled by the actuator rotating the lever when opening of the shutter valve is between the fully-open and predetermined opening, and the shutter valve is closed by wind pressure of travelling wind when the opening of the shutter valve is between the predetermined opening and the fully-closed.

2. The shutter device according to claim 1,
wherein the biasing means is a return spring which is arranged at a connection position between the lever and the rotating shaft.

3. The shutter device according to claim 1,
wherein connection between the rotating shaft and the lever is performed owing to that a convex portion which is arranged at a side face of the shutter as being shorter than an elongate hole formed at the lever is fitted to the elongate hole,
the biasing means is formed of the elongate hole and the convex portion, and
the shutter valve is biased to the lower side of the elongate hole due to own weight.

4. The shutter device according to any one of claims 1 to 3, further comprising a plurality of the shutter valves, and a linkage mechanism which interlocks rotating shafts of the adjacent shutter valves,
wherein the lever and the biasing means are arranged at least at a single shutter valve in common or a single shutter valve for each thereof so that the shutter valves are rotated as being interlocked.

5. The shutter device according to claim 4,
wherein the linkage mechanism is configured that the levers connected to the rotating shafts are connected by a rod.

## Patentansprüche

1. Schließvorrichtung, die Folgendes umfasst:
ein Schließventil, das eine Luftöffnung öffnet und schließt;
einen Hebel, der an einem Ende mit einer Drehwelle des Schließventils verbunden ist und am anderen Ende mit einem Stellglied verbunden ist; und
ein Vorspannmittel, welches das Schließventil in einer Öffnungsrichtung vorspannt,
wobei die Vorrichtung **dadurch gekennzeichnet ist, dass** das Öffnen/Schließen des Schließventils dadurch gesteuert wird, dass das Stellglied den Hebel dreht, wenn sich der Öffnungszustand des Schließventils zwischen der vollständig offenen und einer vorgegebenen Öffnung befindet, und das Schließventil durch den Winddruck des Fahrtwindes geschlossen wird, wenn sich der Öffnungszustand des Schließventils zwischen der vorgegebenen Öffnung und dem vollständig geschlossenen Zustand befindet.

2. Schließvorrichtung nach Anspruch 1,
wobei das Vorspannmittel eine Rückholfeder ist, die an einer Verbindungsposition zwischen dem Hebel und der Drehwelle angeordnet ist.

3. Schließvorrichtung nach Anspruch 1,
wobei die Verbindung zwischen der Drehwelle und dem Hebel dadurch ausgeführt wird, dass ein konvexer Abschnitt, der so an einer seitlichen Fläche des Verschlusses angeordnet ist, dass er kürzer ist als ein längliches Loch, das in dem Hebel ausgebildet ist, in dem länglichen Loch angeordnet wird,
wobei das Vorspannmittel aus dem länglichen Loch und dem konvexen Abschnitt gebildet wird und
wobei das Schließventil aufgrund seines Eigengewichts zur Unterseite des länglichen Loches hin vorgespannt wird.

4. Schließvorrichtung nach einem der Ansprüche 1 bis 3, die des Weiteren mehrere der Schließventile und einen Gestängemechanismus umfasst, der Drehwellen der benachbarten Schließventile miteinander verriegelt,
wobei der Hebel und das Vorspannmittel an mindestens einem einzelnen Schließventil gemeinsamen oder an einem einzelnen Schließventil für jedes von ihnen angeordnet sind, dergestalt, dass die Schließventile im miteinander verriegelten Zustand gedreht werden.

5. Schließvorrichtung nach Anspruch 4,
wobei der Gestängemechanismus so ausgebildet ist, dass die Hebel, die mit den Drehwellen verbunden sind, durch einen Stab verbunden sind.

## Revendications

1. Dispositif de fermeture, comprenant :
un clapet de fermeture qui ouvre et ferme un orifice d'air ;
un levier ayant une extrémité reliée à un arbre tournant du clapet de fermeture et l'autre extrémité reliée à un actionneur ; et
un moyen de sollicitation qui sollicite le clapet de fermeture dans une direction d'ouverture,
le dispositif étant **caractérisé en ce que** l'ouverture/la fermeture du clapet de fermeture est commandée par l'actionneur qui fait tourner le levier lorsque l'ouverture du clapet de fermeture est entre l'état entièrement fermeture et l'ouverture prédéterminée, et le clapet de fermeture est fermé par la pression du vent lorsque l'ouverture du clapet de fermeture est entre l'ouverture prédéterminée et l'état entièrement fermé.

2. Dispositif de fermeture selon la revendication 1,
dans lequel le moyen de sollicitation est un ressort de rappel qui est agencé dans une position de liaison entre le levier et l'arbre tournant.

3. Dispositif de fermeture selon la revendication 1,
dans lequel la liaison entre l'arbre tournant et le levier est réalisée du fait qu'une partie convexe qui est agencée sur une face latérale du dispositif de fermeture comme étant plus courte qu'un trou allongé formé au niveau du levier est montée sur le trou allongé,
le moyen de sollicitation est formé du trou allongé et de la partie convexe, et
le clapet de fermeture est sollicité vers le côté inférieur du trou allongé en raison de son propre poids.

4. Dispositif de fermeture selon l'une quelconque des revendications 1 à 3, comprenant en outre une pluralité de clapets de fermeture, et un mécanisme de liaison qui verrouille réciproquement les arbres tournants des clapets de fermeture adjacents,
dans lequel le levier et le moyen de sollicitation sont agencés au moins au niveau d'un seul clapet de fermeture en commun ou un seul clapet de fermeture pour chacun d'eux, de sorte que les clapets de fermeture sont tournés en étant verrouillés réciproquement.

5. Dispositif de fermeture selon la revendication 4,
dans lequel le mécanisme de liaison est configuré de telle sorte que les leviers reliés aux arbres tournants sont reliés par une tige.
